# FASCICULE DE BREVET EUROPEEN

(11) **EP 1 410 941 B1**
(45) Date de publication et mention de la délivrance du brevet: **28.12.2005**
(21) Numéro de dépôt: 03300149.6
(22) Date de dépôt: 13.10.2003
(51) Int. Cl.: B60K 41/22, F16H 61/28

(54) **Circuit hydraulique d'actionnement de boîte de vitesses robotisées de véhicule automobile**
Hydraulikkreis zur Betätigung eines automatisierten Fahrzeuggetriebes
Hydraulic circuit for actuation of an automated vehicle transmission

(30) Priorité: 14.10.2002 FR 0212722
(43) Date de publication de la demande: 21.04.2004
(73) Titulaire: Renault s.a.s., 92100 Boulogne Billancourt (FR)
(72) Inventeur: Rousseau, Marc, 91530 Saint Maurice Montcouronne (FR); Pacary, Jean Christophe, 91160 Longjumeau (FR)

(56) Documents cités:
- EP-A- 0 802 356
- FR-A- 2 738 608
- US-A- 6 015 031

## Description

L'invention concerne un circuit hydraulique d'actionnement de boîte de vitesses robotisée servant à piloter l'embrayage, la sélection et l'engagement de vitesse d'une boîte de vitesses robotisée de véhicule automobile.

On connaît des boîtes de vitesses robotisées dans lesquelles les fonctions d'ouverture/fermeture du système d'embrayage, de sélection des lignes de rapports et de dégagement/ engagement des rapports sont commandées automatiquement par un module de robotisation.

Un premier mode de réalisation de module de robotisation connu comprend notamment un circuit hydraulique relié à un dispositif hydraulique de commande de l'embrayage par l'intermédiaire d'une électrovanne à deux positions, à un dispositif hydraulique de commande de sélection par l'intermédiaire de deux électrovannes à deux positions, et à un dispositif hydraulique de commande de dégagement/engagement par l'intermédiaire de deux autres électrovannes à deux positions. Toutefois, ce module présente l'inconvénient d'un risque élevé d'occurrence de pannes en raison du grand nombre d'électrovannes utilisé.

Dans un autre module de robotisation connu, le nombre d'électrovannes est réduit à quatre, à savoir :
- deux électrovannes à deux positions pour commander le dispositif hydraulique de commande de dégagement/ engagement,
- une électrovanne à deux positions pour commander le dispositif hydraulique de commande de sélection, et
- une électrovanne à trois positions pour la commande de l'actionnement du passage des vitesses.

Ce module est plus avantageux que le précédent en ce qu'il permet de réduire les risques de pannes, et de réaliser une économie sur le prix de revient. Toutefois, en cas de défaillance de l'électrovanne à trois positions, il est impossible d'actionner l'embrayage ainsi que l'engagement et la sélection des vitesses, car les dispositifs de commande ne sont plus alimentés. Si ce dysfonctionnement se produit alors qu'une vitesse est engagée, le véhicule est immobilisé et ne pourra être déplacé qu'en levant les roues motrices. Le remorquage par le conducteur n'est pas envisageable, ce qui, dans certaines situations, peut se révéler très gênant, voire dangereux, notamment lors du blocage du véhicule dans la circulation. Si ce dysfonctionnement intervent lors d'un changement de vitesse, le véhicule se retrouvera en roues libres et toute accélération sera impossible.

Le document US 6 015 031 décrit un circuit hydraulique selon le préambule de la revendication 1. Ce circuit hydraulique ne comprend que quatre électrovannes, et permet, lors d'une panne des moyens de commande de l'embrayage, de dégager une vitesse engagée. Dans le circuit décrit, le dispositif de commande de sélection est commandé par une première et une seconde électrovanne de commande. La première électrovanne de commande est une électrovanne à trois positions commandant la seconde électrovanne. Cette seconde électrovanne sert également à commander le dispositif de commande d'embrayage.

L'invention vise également à remédier à ces inconvénients en proposant un autre circuit hydraulique comportant un nombre réduit d'électrovannes et dont le dysfonctionnement d'une électrovanne ne peut se traduire par une panne immobilisante.

A cet effet, l'invention a pour objet un circuit hydraulique d'actionnement de boîte de vitesses roborisée de véhicule automobile, les caractéristiques de la revendication 1.

Ainsi, en cas de panne des moyens de commande de l'embrayage, il est encore possible de dégager une vitesse engagée afin que le véhicule soit en roues libres et puisse être déplacé facilement.

Dans ce circuit, les moyens de commande comprennent une électrovanne de commande reliée uniquement au dispositif de commande de sélection, deux électrovannes de commande du dispositif de commande de dégagement/engagement, et une électrovanne à trois positions servant à commander d'une part directement, le dispositif de commande d'embrayage et d'autre part, le dispositif de commande de sélection, l'électrovanne à trois positions servant en outre à alimenter l'électrovanne du dispositif de commande de sélection.

Le nombre d'électrovannes est ainsi limité à quatre, ce qui réduit le risque de panne ou de fuite et augmente la fiabilité de l'ensemble.

Plus particulièrement, les électrovannes de commande du dispositif de commande de dégagement/engagement peuvent être des électrovannes à deux positions modulatrices de pression, et l'électrovanne de commande du dispositif de commande de sélection peut être une électrovanne séquentielle à deux positions.

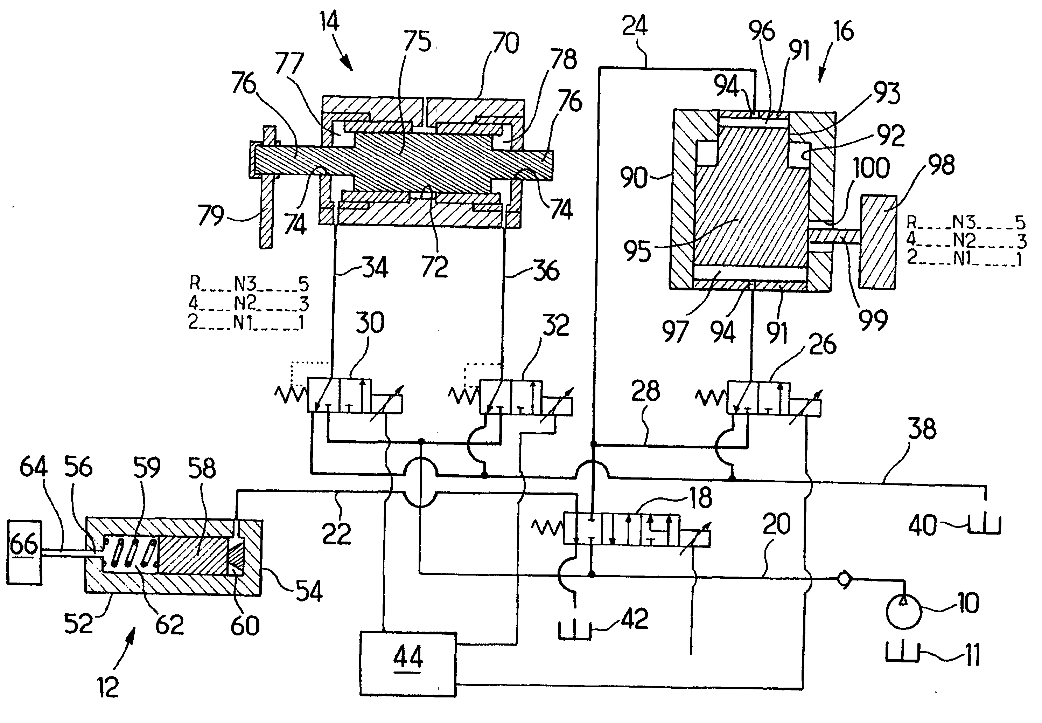

L'invention sera maintenant décrite en référence à l'unique figure annexée, qui est une représentation schématique d'un mode de réalisation du circuit hydraulique selon l'invention.

Le circuit hydraulique représenté sur la figure comprend un générateur de pression 10 relié à un réservoir de liquide d'alimentation 11, un dispositif hydraulique de commande de l'embrayage 12, un dispositif hydraulique de commande de dégagement/engagement des vitesses 14, et un dispositif hydraulique de commande de sélection des vitesses 16.

Une électrovanne à trois positions 18 est montée sur une conduite 20 reliée au générateur de pression 10. Lorsque cette électrovanne est sollicitée à sa position extrême vers la gauche, ses deux sorties relient le réservoir 10 d'une part au dispositif de commande d'embrayage 12 par une conduite 22 et d'autre part au dispositif de commande de sélection 16 par une conduite 24. Une électrovanne à deux positions 26 est montée sur une conduite 28 reliant le dispositif de commande de sélection 16 à la conduite 24.

Deux électrovannes à deux positions 30, 32 sont montées respectivement sur des conduites 34, 36 reliant chacune le dispositif de commande de dégagement/engagement 14 à la conduite 20 et à l'entrée de l'électrovanne 18. Ainsi, les électrovannes 30 et 32 sont alimentées en liquide directement par le générateur de pression 10.

Une conduite de retour du liquide 38 relie les sorties des trois électrovannes 26, 30 et 32 de commande des dispositifs de commande de sélection 16 et de dégagement/engagement 14 à un réservoir de récupération 40. Un réservoir 42 récupère le liquide de retour de l'électrovanne à trois positions 18.

Un calculateur 44 commande les différentes électrovannes en fonction de lois de pilotage et des paramètres d'état du système. A cet effet, le calculateur 44 peut être relié à des capteurs (non représentés) indiquant l'état des dispositifs de commande de l'embrayage 12, du dégagement/engagement 14 et de sélection 16.

Avant de décrire le fonctionnement du circuit hydraulique selon l'invention, on rappellera de manière schématique les structures de dispositifs connus de commande d'embrayage 12, de commande de dégagement/engagement 14 et de sélection 16, ainsi que leur principe de fonctionnement en référence à la figure. Ces dispositifs peuvent être utilisés avec une boîte de vitesses manuelle classique comprenant cinq vitesses et une marche arrière disposées suivant un schéma en H de la manière suivante :

| | | |
|---|---|---|
| R | N3 | 5 |
| 4 | N2 | 3 |
| 2 | N1 | 1 |

où les références numériques 1 à 5 représentent les numéros des vitesses ou des rapports, et R la marche arrière, et où N1, N2, N3 représentent les points neutres de la boîte de vitesses, entre chaque changement de vitesse.

Bien entendu, d'autres modes de réalisation de ces dispositifs, adaptés à d'autres types de boîtes de vitesses, peuvent être commandés par le circuit selon l'invention.

Le dispositif de commande d'embrayage 12 comprend un carter ou cylindre 52 fermé à une extrémité par une paroi de fond 54 et comportant un orifice 56 à son autre extrémité.

Dans le cylindre 52 est monté coulissant un piston émetteur 58. Ce dernier définit dans le cylindre 52 une première chambre 60 se trouvant du côté du fond 54 et une seconde chambre 62 se trouvant du côté de l'orifice 56. Le piston émetteur 58 est maintenu en butée contre le fond 54 par un ressort de rappel 59 en position fermée de l'embrayage.

La première chambre 60 est alimentée en liquide d'alimentation par la conduite 22. La seconde chambre 62 est reliée par l'intermédiaire de l'orifice 56 et d'une conduite 64 à un récepteur concentrique hydraulique 66, connu sous l'abréviation CSC. Le CSC 66 est, par exemple, fixé à l'intérieur de la cloche d'un embrayage à diaphragme (non représenté). Ces différents éléments sont connus de l'homme du métier et ne seront pas décrits plus en détail.

Lorsque la pression dans la première chambre 60 s'élève, le piston émetteur 58 se déplace à l'encontre de la force du ressort de rappel 59. La pression dans la seconde chambre 62 augmente jusqu'à ce qu'elle atteigne une valeur provoquant l'actionnement du CSC 66 et l'ouverture de l'embrayage. L'embrayage se referme lorsque la pression dans la première chambre 60 devient insuffisante pour contrer la force du ressort 59, le piston 58 revenant à sa position de butée.

Le dispositif de commande de dégagement/engagement 14 comprend un carter 70 contenant un alésage 72 et comportant un orifice 74 à chacune de ses extrémités.

Dans l'alésage 72 est monté coulissant un piston 75 dont les extrémités 76 présentent un diamètre inférieur, sensiblement identique au diamètre des orifices 74. Le piston 75 définit dans l'alésage 72 une première chambre 77 se trouvant du côté d'une extrémité et une seconde chambre 78 se trouvant du côté de l'autre extrémité. Les première et seconde chambres 77, 78 sont alimentées en liquide par l'intermédiaire des conduites 34 et 36 respectivement.

Un axe d'engagement 79 est solidaire d'une extrémité du piston 75 à l'extérieur du carter 70. Cet axe d'engagement est relié mécaniquement à l'axe de commande de la boîte de vitesses mécanique (non représenté) afin de provoquer l'engagement ou le dégagement des pignons de la boîte de vitesses (non représentée).

Le dispositif 14 est représenté en position neutre sur la figure : aucune vitesse n'est alors engagée, ce qui correspond à l'un des points neutres N1, N2 ou N3. Si l'on ouvre l'électrovanne 30, la première chambre 77 est alimentée de sorte que sa pression augmente et provoque le déplacement du piston 75 en direction de la deuxième chambre 78. Ce mouvement correspond par exemple à l'engagement d'une des vitesses 1, 3 ou 5. Lorsque l'on ouvre l'électrovanne 32, c'est la seconde chambre 78 qui sera alimentée et sa pression augmentera jusqu'à provoquer le déplacement du piston 75 dans le sens inverse. Ce mouvement correspond alors au passage par l'un des points neutres N1, N2, N3, puis à l'engagement d'une des vitesses 2, 4 ou R.

Les électrovannes 30 et 32 sont de préférence des électrovannes modulatrices, dont on peut faire varier le débit du liquide en sortie, afin que l'engagement et le dégagement des pignons se fasse progressivement.

Le dispositif de commande de sélection 16 comprend un carter 90 contenant un alésage 92 et fermé à ses deux extrémités par des fonds 91 qui sont percés par des orifices 94. L'alésage 92 présente un diamètre de taille inférieure 93 à l'une de ses extrémités.

Dans l'alésage 92 est monté coulissant un piston 95 dont l'une des extrémités présente un diamètre plus petit, sensiblement identique au diamètre 93 de l'alésage 92. Le piston 95 définit dans l'alésage 92 une première chambre 96 se trouvant du côté de l'extrémité de plus faible diamètre et une seconde chambre 97 se trouvant du côté de l'autre extrémité. Les première et seconde chambres 96, 97 sont alimentées en liquide par l'intermédiaire des orifices 94 et des conduites 24 et 28 respectivement.

Un axe de sélection 98 est solidaire en translation du piston 95. A cet effet, un élément de fixation 99 le relie radialement à la paroi latérale du piston 95, à travers un orifice 100 du carter 90. Cet axe de sélection est également relié à l'axe de commande de la boîte de vitesses mécanique afin de permettre la sélection des pignons de vitesse à engager.

Sur la figure, le dispositif de commande de sélection 16 est représenté dans la position sélectionnant la ligne (4, N2, 3). A partir de cette position, l'ouverture de l'électrovanne 26 alimente la deuxième chambre 97 en liquide par l'intermédiaire de l'électrovanne 18 et provoque le déplacement du piston 95 vers la première chambre 96. Le déplacement résultant de l'axe de sélection 98 correspond alors à la sélection de la ligne de rapports (R, N3, 5). La sélection des autres lignes de rapport est alors réalisée en commandant l'électrovanne 18 de manière à alimenter la chambre 96 en liquide et à provoquer le déplacement du piston 95 dans le sens inverse. Les électrovannes peuvent être du type séquentiel, sans contrôle du débit fourni en sortie.

Le principe de fonctionnement du circuit hydraulique est maintenant décrit pour une boîte de vitesses comprenant cinq vitesses et une marche arrière disposées suivant un schéma en H tel que décrit précédemment.

Un changement de vitesse est effectué de la manière suivante :

### 1. Ouverture de l'embrayage :

Le calculateur 44 commande l'actionnement de l'électrovanne 18 de façon à alimenter le dispositif de commande d'embrayage 12 en liquide d'alimentation (déplacement du tiroir de l'électrovanne 18 vers la position extrême vers la gauche sur la figure). Quand la pression est suffisante, le piston 58 se déplace et actionne le CSC 66 dans le sens de l'ouverture de l'embrayage.

### 2. Dégagement des vitesses :

Si une vitesse est engagée, le calculateur 44 commande l'une des électrovannes 30 ou 32 afin de déplacer le piston 75 du dispositif de commande de dégagement 14 vers une position neutre.

### 3. Sélection d'une vitesse :

Le calculateur 44 commande l'électrovanne 18 et/ou l'électrovanne 26 de manière à déplacer le piston 95 du dispositif de commande de sélection 16 afin de choisir une ligne de rapport (2, N1, 1 ou 4, N2, 3 ou R, N3, 5).

### 4. Engagement d'une vitesse :

Le calculateur 44 commande l'ouverture d'une des électrovannes 30 ou 32 de manière à déplacer le piston 75 afin d'engager l'une ou l'autre des deux vitesses de la ligne de rapport sélectionnée.

### 5. Fermeture de l'embrayage :

Le calculateur 44 commande alors l'électrovanne 18 afin que la pression dans la chambre 60 diminue et que le ressort de rappel ramène le piston 58 en butée sur le fond 54.

## Revendications

1. Circuit hydraulique d'actionnement de boite de vitesses robotisée de véhicule automobile, ledit circuit hydraulique comprenant :
- un générateur de pression (10) alimentant le circuit en liquide sous pression,
- un dispositif hydraulique de commande d'embrayage (12),
- un dispositif hydraulique de commande de dégagement engagement (14) des rapports,
- un dispositif hydraulique de commande de sélection (16) des lignes de rapports, et
- des moyens de commande (18, 26, 30, 32) des différents dispositifs hydrauliques de commande,
dans lequel l'alimentation en liquide sous pression des moyens de commande (30, 32) du dispositif de commande de dégagement/engagement (14) est indépendante de l'alimentation des moyens de commande (18) du dispositif de commande d'embrayage (12) et l'alimentation des moyens de commande (26) du dispositif de commande de sélection (16) se fait par l'intermédiaire des moyens de commande (18) du dispositif de commande d'embrayage (12), **caractérisé en ce que** les moyens de commande (18, 26, 30, 32) comprennent une électrovanne de commande (26) reliée uniquement au dispositif de commande de sélection (16), deux électrovannes de commande (30, 32) du dispositif de commande de dégagement/engagement (14), et une électrovanne à trois positions (18) servant à commander d'une part directement le dispositif de commande d'embrayage (12) et d'autre part le dispositif de commande de sélection (16), et **en ce que** l'électrovanne à trois positions (18) sert en outre à alimenter l'électrovanne (26) du dispositif de commande de sélection (16).

2. Circuit hydraulique selon la revendication 1, **caractérisé en ce que** les électrovannes de commande (30, 32) du dispositif de commande de dégagement/engagement (14) sont des électrovannes à deux positions modulatrices, et **en ce que** l'électrovanne de commande (26) du dispositif de commande de sélection est une électrovanne séquentielle à deux positions.

## Patentansprüche

1. Hydraulischer Betätigungskreislauf eines automatischen Getriebes eines Kraftfahrzeugs, wobei der hydraulische Kreislauf aufweist:
- einen Druckerzeuger (10), welcher den Kreislauf mit Flüssigkeit unter Druck versorgt,
- eine hydraulische Vorrichtung zur Steuerung der Kupplung (12),
- eine hydraulische Vorrichtung zur Steuerung des Herausbringens/Einlegens (14) der Gänge,
- eine hydraulische Vorrichtung zur Steuerung der Auswahl (16) der Ganglinien, und
- Steuermittel (18, 26, 30, 32) der unterschiedlichen, hydraulischen Steuervorrichtungen,
bei welchem die Versorgung mit Flüssigkeit unter Druck der Steuermittel (30, 32) der Steuervorrichtung eines Herausbringens/Einlegens (14) unabhängig ist von der Versorgung der Steuermittel (18) der Steuervorrichtung der Kupplung (12) und die Versorgung der Steuermittel (26) der Steuermittel zum Auswählen (16) über Steuermittel (18) der Vorrichtung zur Steuerung der Kupplung (12) erfolgt, **dadurch gekennzeichnet, dass** die Steuermittel (18, 26, 30, 32) ein Steuer-Elektroventil (26) umfassen, welches lediglich mit der Steuervorrichtung zur Auswahl (16) verbunden ist, zwei Steuer-Elektroventile (30, 32) der Steuervorrichtung zum Herausbringen/Einlegen (14) und ein Elektroventil mit drei Stellungen (18), welches einerseits zum direkten Steuern der Steuervorrichtung der Kupplung (12) und andererseits der Steuervorrichtung zur Auswahl (16) dient, und dass das Elektroventil mit drei Stellungen (18) des Weiteren zum Versorgen des Elektroventils (26) der Steuervorrichtung zur Auswahl (16) dient.

2. Hydraulischer Kreislauf nach Anspruch 1, **dadurch gekennzeichnet, dass** die Steuer-Elektroventile (30, 32) der Steuervorrichtung zum Herausbringen/Einlegen (14) Elektroventile mit zwei modulatorischen Stellungen sind und dass das Steuer-Elektroventil (26) der Steuervorrichtung zur Auswahl ein sequentielles Elektroventil mit zwei Stellungen ist.

## Claims

1. A hydraulic circuit for the actuation of a robot-controlled gearbox of a motor vehicle, said hydraulic circuit comprising:
- a pressure generator (10) feeding the circuit with liquid under pressure,
- a hydraulic clutch control device (12),
- a hydraulic device (14) for controlling disengagement/engagement of the gear ratios,
- a hydraulic device (16) for controlling selection of the lines of gear ratios, and
- control means (18, 26, 30, 32) for the different hydraulic control devices,
wherein the feed of liquid under pressure to the control means (30, 32) of the disengagement/engagement control device (14) is independent of the feed to the control means (18) of the clutch control device (12) and the feed to the control means (26) of the selection control device (16) is by way of the control means (18) of the clutch control device (12),
**characterised in that** the control means (18, 26, 30, 32) comprise an electrically operated control valve (26) connected solely to the selection control device (16), two electrically operated control valves (30, 32) of the disengagement/engagement control device (14) and an electrically operated three-position valve (18) serving to control on the one hand directly the clutch control device (12) and on the other hand the selection control device (16), and that the electrically operated three-position valve (18) also serves to feed the electrically operated valve (26) of the selection control device (16).

2. A hydraulic circuit according to claim 1 **characterised in that** the electrically operated control valves (30, 32) of the disengagement/engagement control device (14) are electrically operated two-position modulating valves and that the electrically operated control valve (26) of the selection control device is an electrically operated two-position sequential valve.
